**Europäisches Patentamt**

**European Patent Office**

**Office européen des brevets**

(19)

(11) Veröffentlichungsnummer: **0 148 996**
**B1**

(12) # EUROPÄISCHE PATENTSCHRIFT

(45) Veröffentlichungstag der Patentschrift:
**22.04.87**

(51) Int. Cl.⁴: **B 23 G 5/14**, B 23 B 31/38

(21) Anmeldenummer: **84110366.6**

(22) Anmeldetag: **31.08.84**

(54) Überlastkupplungseinrichtung für Gewindeschneidfutter oder Schnellwechseleinsätze für diese.

(30) Priorität: **20.12.83 DE 3345948**

(43) Veröffentlichungstag der Anmeldung:
**24.07.85 Patentblatt 85/30**

(45) Bekanntmachung des Hinweises auf die Patenterteilung:
**22.04.87 Patentblatt 87/17**

(84) Benannte Vertragsstaaten:
**FR GB IT**

(56) Entgegenhaltungen:
**DE - A - 2 233 130**
**DE - A - 2 328 464**
**DE - A - 2 923 141**
**DE - B - 1 602 701**
**DE - B - 1 810 223**
**DE - B - 2 511 148**
**US - A - 3 263 451**

(73) Patentinhaber: **Otto Bilz, Werkzeugfabrik,
Vogelsangstrasse 8, D-7302 Ostfildern 2 (DE)**

(72) Erfinder: **Ueberall, Paul, Mozartstrasse 46,
D-7303 Neuhausen (DE)**

(74) Vertreter: **Kratzsch, Volkhard, Dipl.-Ing.,
Mülbergerstrasse 65, D-7300 Esslingen (DE)**

## Beschreibung

Die Erfindung bezieht sich auf eine Überlastkupplungseinrichtung für Gewindeschneidfutter oder Schnellwechseleinsätze für diese, mit ansonsten den Merkmalen im Oberbegriff des Anspruchs 1.

Es ist eine Überlastkupplungseinrichtung dieser Art bekannt (DE-B 25 11 148), die sich sehr gut bewährt hat. Hierbei hat die Antriebshülse zweckmässigerweise drei in Umfangsrichtung in etwa gleichen Winkelabständen aufeinanderfolgende Käfigschlitze, in denen je eine Kupplungskugel gerade mit ausreichendem Bewegungsspiel gehalten ist. Die Schlitzbreite entspricht daher unter Berücksichtigung dieses Bewegungsspieles etwa dem Kugeldurchmesser. Die Wand jedes Käfigschlitzes, die beim Auslösen der Kugeltaschenkupplung die Kupplungskugeln aus den Kugeltaschen heraushebt und vor sich herschiebt, ist hier so ausgebildet, dass beim Entkuppeln die Kupplungskugeln in dieser entkuppelten Stellung verbleiben und nicht dazu neigen, selbsttätig immer wieder beim Passieren der Kugeltaschen in diese zurückzufallen unter kurzzeitiger Einrückung der Kupplung. Die Überlastkupplungseinrichtung arbeitet genau und trennt bei Erreichen des Auslösemomentes dauerhaft und zuverlässig vom Antrieb. Unterstützt wird dies noch durch besondere Gestaltung der axial auf die Kupplungskugeln einwirkenden Flächen des federbelasteten Druckringes. Die einzelnen, dadurch erzielten Vorteile sind eingehend in der DE-B 25 11 148 beschrieben. Sie brauchen daher hier nicht wiederholt zu werden.

Es hat sich gezeigt, dass die besondere Gestaltung derjenigen Wände der Käfigschlitze, die beim Auslösen der Kupplung die Kupplungskugeln herausheben und vor sich herschieben, nicht zuletzt deswegen einen recht grossen Fertigungsaufwand und grosse Genauigkeit erfordern, weil diese Flächen in zwei Einzelflächen aufgeteilt sind, von denen die radial weiter innen liegende, der Umfangsfläche des Antriebsschaftes benachbarte Einzelfläche als besonderer Berührungsabschnitt ausgebildet ist, der im gekuppelten Zustand etwa tangential am Umfang der Kupplungskugel anliegt. Der andere, sich daran anschliessende Flächenabschnitt verläuft unter einem Winkel gegenüber diesem Berührungsabschnitt und dabei etwa parallel zur gegenüberliegenden Wand des Käfigschlitzes. Beide Flächenabschnitte laufen in einem Eckbereich zusammen, der im wesentlichen auf einem Umfangskreis liegt, welcher grösser ist als der die äussere Umfangsfläche des Antriebsschaftes umschreibende Umfangskreis und auf dem in etwa die Mittelpunkte der sich in den Kugeltaschen befindlichen Kupplungskugeln im gekuppelten Zustand liegen. Eine solche Käfigschlitzwand, die in zwei einzelne, zueinander winklig verlaufende Flächen unterteilt ist, bedeutet fertigungstechnisch doch einen beachtlichen Aufwand. Im Eckbereich dieser einen Käfigschlitzwand, wo beide Teilflächen aufeinanderstossen, ergibt sich eine schneidenartige Linie. Beim Übergang der Kupplungskugeln von der gekuppelten in die entkuppelte Stellung müssen die Kupplungskugeln diese schneidenartige Linie passieren, wobei auf die Kupplungskugeln in diesem Bereich bei der Umfangsbewegung noch Kräfte ausgeübt werden. Dies kann zu erhöhtem Verschleiss sowohl im genannten Eckbereich als auch bei den Kupplungskugeln führen.

Der Erfindung liegt daher die Aufgabe zugrunde, eine Überlastkupplungseinrichtung der im Oberbegriff des Anspruchs 1 genannten Art zu schaffen, die unter Beibehaltung aller dadurch erzielten Vorteile einfach und billig im Aufbau ist, kleine axiale und vor allem radiale Abmessungen zulässt, dabei verschleissarm sowie hinsichtlich des Ansprechverhaltens zuverlässig und genau arbeitet, die ferner bei Erreichen des Auslösemomentes dauerhaft und zuverlässig vom Antrieb trennt ohne sich ergebende schlagartige Beanspruchungen, und die ausserdem im Bereich zwischen den Käfigschlitzen und den Kugeln die Verschleissarmut noch steigert und zugleich einfacher und günstiger gefertigt werden kann.

Die Aufgabe ist bei einer Überlastkupplungseinrichtung der im Oberbegriff des Anspruchs 1 genannten Art gemäss der Erfindung durch die Merkmale im Kennzeichnungsteil des Anspruchs 1 gelöst. Vorteilhafte Weiterbildungen ergeben sich aus den folgenden Ansprüchen 2-13.

Bei einer vorteilhaften Ausgestaltung sind jeweils drei Käfigschlitze der ersten Gruppe sowie drei Käfigschlitze der zweiten Gruppe mit jeweils darin gehaltenen ersten bzw. zweiten Kupplungskugeln vorgesehen. Dabei haben die in den zweiten Käfigschlitzen grösserer Umfangserstreckung lagernden zweiten Kupplungskugeln im wesentlichen nur dann eine echte Kupplungsaufgabe, wenn nach dem Entkuppeln bei Umlauf in Arbeitsantriebsrichtung ein Wiedereinkuppeln durch gegensinnige Drehung erfolgen soll. In dieser zur Arbeitsantriebsrichtung gegensinnigen Richtung wirken die zweiten Kupplungskugeln in den zweiten Käfigschlitzen als das Rückdrehmoment übertragende Elemente. Das in Arbeitsantriebsrichtung im gekuppelten Zustand zu übertragende Moment wird dagegen ausnahmslos von den ersten Kupplungskugeln in den ersten Käfigschlitzen übertragen. Diese ersten Käfigschlitze sind hinsichtlich ihrer einander gegenüberliegenden Wände jeweils von innen nach aussen gesehen glatt durchgängig. Sie lassen sich daher einfacher herstellen. Auch ist ein möglicher vorschneller Verschleiss der Käfigschlitzwände und/oder der Kupplungskugeln durch diese durchgängige Gestaltung noch weiter reduziert. Trotzdem ist sichergestellt, dass dann, wenn das Gegenmoment am Gewindebohrer das eingestellte Auslösemoment der Kugeltaschenkupplung übersteigt, die ersten Kupplungskugeln über die daran anliegenden Wände der ersten Käfigschlitze, obwohl diese von innen nach aussen gesehen glatt durchgängig sind, zuverlässig aus den Kugeltaschen herausgedrückt werden, gegen die Federbelastung des axial darauf wirkenden Druckringes. Dabei rollen die ersten Kupplungskugeln in den ersten Käfigschlitzen längs einer der Käfigschlitzneigung entsprechenden Bahn nach aussen, so weit, bis die ersten Kupplungskugeln am Federelement anstossen, das in diesem Bereich punktuell von den ersten Kupplungskugeln dann radial nach aussen gedrückt wird unter verstärkter federnder Vorspannung dieser ersten Kupplungskugeln. Die so ansprechende Kugeltaschenkupplung trennt dann also den bis dahin über die Antriebshülse und die eingerückte Kugeltaschenkupplung angetriebenen Antriebsschaft mit darin gehaltenem Gewindebohrer. Die nach wie vor angetriebene Antriebshülse kann frei umlaufen bei feststehendem Antriebsschaft mit Gewindebohrer. Der Gewindebohrer und das Bohrloch werden dadurch gegen Beschädigung, Brechen sowie Ausbrechen der Flanken geschützt. Die zweiten Kupplungskugeln der zweiten Käfigschlitze haben bei diesem entkuppelten Zustand auch die Aufgabe, der unter axialem Federdruck stehenden Druckring dann abzustützen, wenn beim Umlauf die ersten Kupplungskugeln Kugeltaschen erreichen und bestrebt sind, unter möglicher schlagartiger Einkupplung in die Kugeltaschen zu gelangen. Wären die zweiten Kupplungskugeln in den zweiten Käfigschlitzen nicht vorhanden, würde dieses Wiedereinkuppeln geschehen mit sich anschliessendem erneutem Wiederauskuppeln. Die Folge wären wechselnde und schlagartig wirkende Drehmomentbelastungen für den Gewindebohrer und das Werkstück, aber auch für die Werkzeugmaschine bei der Bearbeitung. Da beim Ansprechen der Kupplung und Trennen im Wechsel immer eine der beiden Kupplungskugeln, und zwar entweder die erste Kupplungskugel oder die zweite Kupplungskugel, unter radialer und axialer Vorspannung steht, während die andere Kupplungskugel entlastet und frei ist, sind diese Stossbelastungen vermieden. Zum Herausdrehen des Gewindebohrers in zur Arbeitsantriebsrichtung gegensinniger Drehrichtung werden die zweiten Kupplungskugeln über die eine, geneigte Wand der zweiten Käfigschlitze selbsttätig wieder in Richtung auf die Kugeltaschen und in diese eingeschoben, wobei sich die Druckfedern des Druckringes entlasten. Bei dieser Rücklaufdrehung erfolgt eine zwangsweise Mitnahme infolge der in Richtung der Rücklaufdrehung verlaufenden Neigung der einen Wand der zweiten Käfigschlitze, durch die ein etwaiges Auswandern der zweiten Kupplungskugeln bei dieser Rücklaufdrehung sicher vermieden ist. Vielmehr werden die zweiten Kupplungskugeln, durch die Schräglage dieser Wand bedingt, immer in Kuppelstellung gehalten. Die erfindungsgemässe Überlastkupplungseinrichtung führt daher vollauf zu den gleichen Vorzügen, wie die genannte bekannte Überlastkupplungseinrichtung, mit dem erzielten besonderen Vorteil eines noch weiter minimierten Verschleisses und noch weiter reduzierten Herstellungsaufwands, insbesondere reduzierter Kosten. Die zusätzlichen drei zweiten Kupplungskugeln und das zusätzliche Federelement fallen hierbei kostenmässig nicht ins Gewicht. Da die ersten Käfigschlitze, und zwar eine Wand dieser, zum Entkuppeln und die zweiten Käfigschlitze, und zwar eine Wand dieser, zum Wiedereinkuppeln bei Rücklaufdrehung dienen, lassen sich die Neigungen der einzelnen auf die ersten bzw. zweiten Kupplungskugeln entsprechend einwirkenden Wände dieser Käfigschlitze jeweils unabhängig voneinander und so bestimmen, wie es für das Entkuppeln bzw. bei gegensinniger Drehung Einkuppeln am zweckmässigsten ist. Auch dies ist gegenüber bekannten Kupplungseinrichtungen dieser Art ein entscheidender Vorteil. Bei allem ist die Überlastkupplungseinrichtung nach wie vor weder hinsichtlich des Axialmasses noch des Radialmasses grösser.

Weitere Einzelheiten und Vorteile ergeben sich aus der nachfolgenden Beschreibung.

Der vollständige Wortlaut der Ansprüche ist vorstehend allein zur Vermeidung unnötiger Wiederholungen nicht wiedergegeben, sondern statt dessen lediglich durch Nennung der Anspruchsnummer darauf Bezug genommen, wodurch jedoch alle diese Anspruchsmerkmale als an dieser Stelle ausdrücklich und erfindungswesentlich offenbart zu gelten haben.

Die Erfindung ist nachfolgend anhand eines in den Zeichnungen gezeigten Ausführungsbeispieles eines Gewindeschneideinsatzes für entsprechende Schnellwechselfutter näher erläutert. Es zeigen:

Fig. 1 einen schematischen, axialen Längsschnitt des Gewindeschneideinsatzes ohne Futter im gekuppelten Zustand,

Fig. 2 einen Ausschnitt eines Teiles in Fig. 1 in grösserem Massstab,

Fig. 3 einen Schnitt allein der Antriebshülse entlang der Linie III-III in Fig. 1,

Fig. 4 eine Seitenansicht allein der Antriebshülse in Fig. 3,

Fig. 5-8 jeweils einen Schnitt entlang der Linie III-III, und zwar im gekuppelten Zustand gemäss Fig. 5 bzw. in verschiedenen Zwischenstadien jeweils im entkuppelten Zustand gemäss Fig. 6-8.

Der Schnellwechseleinsatz 10 ist, bis auf nachstehend beschriebene Besonderheiten, bekannt (DE-B 25 11 148), und zwar sowohl hinsichtlich seiner konstruktiven Gestaltung als auch seiner Wirkungsweise. Zur Vermeidung von Wiederholungen wird daher auf die DE-B 25 11 148 verwiesen, wobei nachfolgend nur die zum Verständnis wichtigsten Elemente sowie die neuen konstruktiven Merkmale erläutert sind.

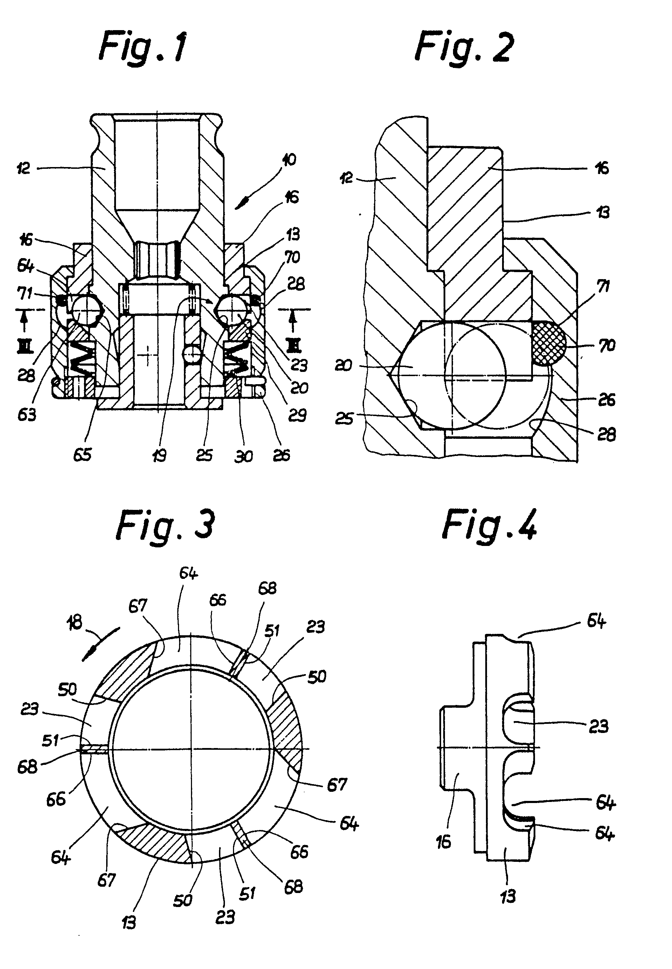

Der Schnellwechseleinsatz 10 für einen nicht weiter gezeigten Gewindebohrer weist einen zylindrischen Antriebsschaft 12 und eine koaxial zum Antriebsschaft 12 und diesem gegenüber drehbar gehaltene zylindrische Antriebshülse 13 auf, die in Fig. 1 oben zwei axial vorspringende, diametral gegenüberliegende Antriebsnocken 16 trägt. Ist der Schnellwechseleinsatz 10 in ein zugeordnetes, nicht gezeigtes Schnellwechselfutter zum Gewindeschneiden eingesteckt, gelangen die Antriebsnocken 16 in Drehmomentmitnahme mit dem Schnellwechselfutter. Diese Arbeitsantriebsrichtung ist durch Pfeil 18 angedeutet. Sie verläuft bei Fig. 1, von oben in Achsrichtung auf den Schnellwechseleinsatz 10 geschaut, im Uhrzeigersinn und bei Fig. 3, 5 bis 7 im Gegenuhrzeigersinn.

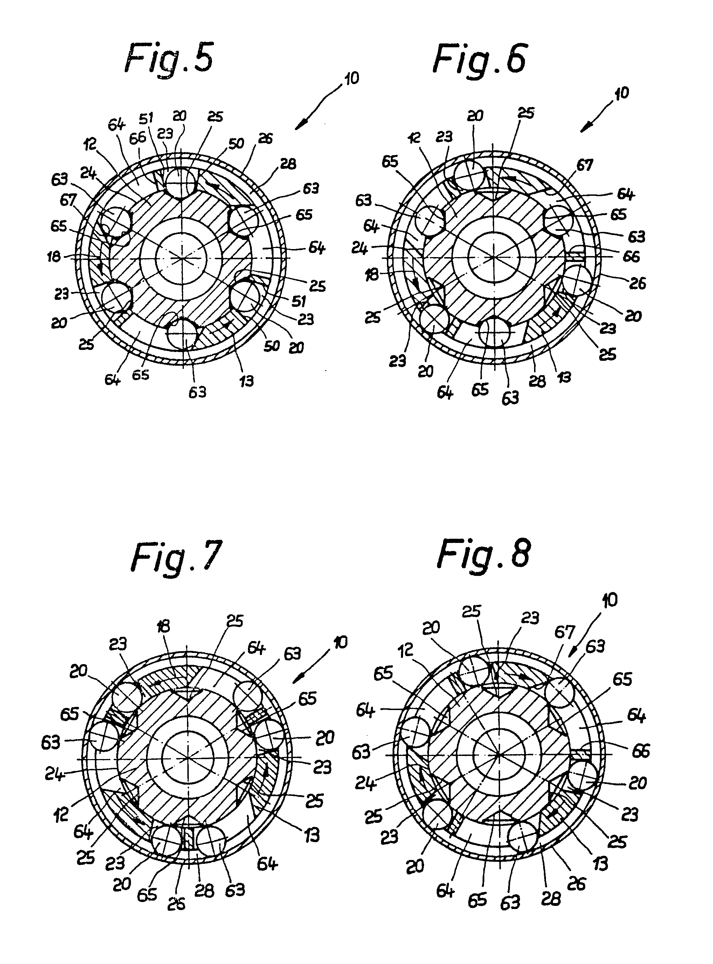

Zwischen Antriebshülse 13 und Antriebsschaft 12 sitzt eine als Kugeltaschenkupplung 19 ausgebildete Drehmomentkupplung mit einstellbarem, auslösendem Drehmoment. Diese ist federbelastet. Sie weist eine erste Gruppe von drei in Umfangsrichtung in gleichen Winkelabständen voneinander angeordneten Kupplungskugeln 20 sowie eine zweite Gruppe von ebenfalls drei in Umfangsrichtung in gleichen Winkelabständen voneinander angeordneten Kupplungskugeln 63 auf, die in der gekuppelten Stellung (Fig. 5) in wesentlichen jeweils gleiche Umfangswinkelabstände von den Kupplungskugeln 20 der ersten Gruppe haben.

Auf der axialen Stirnseite, die den Antriebsnocken 16 gegenüberliegt, enthält die Antriebshülse 13 eine erste Gruppe von Käfigschlitzen 23, in denen jeweils eine Kupplungskugel 20 aufgenommen ist. Die ersten Käfigschlitze 23 folgen in Umfangsrichtung im wesentlichen in gleichen Winkelabständen aufeinander.

Eng benachbart diesen ersten Käfigschlitzen 23 folgen diesen jeweils zweite Käfigschlitze 64 in Umfangsrichtung, die den zweiten Kupplungskugeln 63 zugeordnet sind und die ebenfalls, unter sich betrachtet, in Umfangsrichtung im wesentlichen in gleichen Winkelabständen aufeinanderfolgen. Die Käfigschlitze 23 und 64 sind jeweils in Axial- und Radialrichtung, in letzterer nach innen und aussen, offen. Ihre axiale Tiefe ist kleiner als der Durchmesser jeder zugeordneten Kupplungskugel 20 bzw. 63, so dass diese in axialer Richtung in Fig. 1, 2 nach unten hin über das untere Stirnende der Antriebshülse 13 überstehen können.

Die Schlitzbreite der ersten Käfigschlitze 23 ist, wie vor allem Fig. 3 zeigt, mindestens so gross wie der Durchmesser der Kupplungskugeln 20.

Die zweiten Käfigschlitze 64 dagegen haben im Verhältnis zum Durchmesser der Kupplungskugeln 63 eine wesentlich grössere Schlitzbreite. Diese kann z.B. bis zu dem Zweifachen des Durchmessermasses der Kupplungskugeln 63 betragen. Der Durchmesser der Kupplungskugeln 20 und derjenigen der Kupplungskugeln 63 ist zweckmässigerweise gleich gross, so dass nur eine Sorte von Kugeln zum Einsatz kommt.

Der Antriebsschaft 12 besitzt im Axialbereich der Käfigschlitze 23 und 64 auf seiner äusseren Umfangsfläche 24 für die Kupplungskugeln 20 und für die zweiten Kupplungskugeln 63 insgesamt sechs in Umfangsrichtung in gleichen Winkelabständen voneinander angeordnete Kugeltaschen 25 und 65. Die Kugeltaschen 25 und 65 sind kugelkalottenförmig vertieft und haben eine geringere Tiefe als der Kugelradius. Die Kugeltaschen 25 dienen zur Aufnahme der Kupplungskugeln 20 und die Kugeltaschen 65 zur Aufnahme der Kupplungskugeln 63 in der in Fig. 5 gezeigten, gekuppelten Stellung.

Sämtliche Käfigschlitze 23 und 64 sind gegen die Arbeitsantriebsrichtung gemäss Pfeil 18 der Antriebshülse 13 geneigt gestellt. Einzelheiten dazu werden noch erläutert.

Auf der Antriebshülse 13 sitzt eine Abschlusshülse 26 axial unverschiebbar, die die Antriebshülse 13 und den Antriebsschaft 12 koaxial umschliesst. Die Abschlusshülse 26 enthält im Axialbereich aller Käfigschlitze 23, 64 im Inneren eine Ringnut 28, deren Nutgrund mit einem mindestens dem Durchmesser der Kupplungskugeln 20, 63 entsprechenden Radialabstand von der Umfangsfläche 24 verläuft.

Im Ringraum zwischen Antriebsschaft 12 und Abschlusshülse 26 befindet sich ein Druckring 29, der mittels an der Abschlusshülse 26 verstellbar abgestützter Druckfedern 30 axial in Richtung auf die Käfigschlitze 23 und 64 und gegen die Kupplungskugeln 20 sowie 63 anpressbar ist.

Nachfolgend sind besondere Einzelheiten zunächst der ersten Käfigschlitze 23 unter Bezugnahme auf Fig. 3 erläutert.

Die beiden mit der Schlitzbreite gegenüberstehenden Wände 50, 51 jedes ersten Käfigschlitzes 23 streben, in Richtung radial nach aussen gesehen, zumindest schwach V-förmig auseinander. Dabei verläuft die in Arbeitsantriebsrichtung (Pfeil 18) beim Ansprechen der Kugeltaschenkupplung 19 hinten befindliche, auf die Kupplungskugeln 20 im Sinne einer Heraushebung aus ihren Kugeltaschen 25 arbeitende Wand 50 etwa auf einer Sekante zur Diametralen.

Die andere Wand 51 verläuft etwa auf einer Diametralen. Diese drei Käfigschlitze 23 der ersten Gruppe übertragen mit den dazugehörigen ersten Kupplungskugeln 20 in Arbeitsantriebsrichtung gemäss Pfeil 18 das Drehmoment, wobei die umlaufend angetriebene Antriebshülse mit den hinteren Wänden 50 die Kupplungskugeln 20, die sich in ihren Kugeltaschen 25 befinden, vor sich herschiebt.

Bei den zweiten Käfigschlitzen 64 streben die sich mit der Schlitzbreite gegenüberstehenden Wände 66 und 67, in Radialrichtung nach aussen gesehen, ebenfalls zumindest schwach V-förmig auseinander. Dabei verläuft die eine Wand 66, die in der Arbeitsantriebsrichtung gemäss Pfeil 18 beim Ansprechen der Kugeltaschenkupplung 19 auf die zugeordnete Kupplungskugel 63 im Sinne einer Heraushebung aus ihrer Kugeltasche 65 arbeitet (Fig. 7) und die Kupplungskugel 63 dann vor sich herschiebt, ebenfalls etwa auf einer Diametralen. Die andere Wand 67 verläuft dagegen auf einer zur Diametralen etwa parallelen Sekante. Da die beiden Wände 66, 67 durch die relativ grosse Breite dieser zweiten Käfigschlitze 65 relativ weit voneinander entfernt sind, kann die darin enthaltene Kupplungskugel 63 sich im Bereich zwischen beiden Wänden 66, 67 bewegen. Die zweiten Käfigschlitze 64 übertragen mit der einen Wand 67 in der zur Arbeitsantriebsrichtung gemäss Pfeil 18 gegensinnigen Rückdrehrichtung (Fig. 8) ein Antriebsmoment, so dass in dieser Richtung ein zwangsweises Herausschrauben eines Gewindebohrers aus dem Gewindeloch erfolgt.

Beide etwa auf einer Diametralen verlaufenden Wände 51 und 66 des ersten Käfigschlitzes 23 bzw. des zweiten Käfigschlitzes 64 verlaufen zumindest im wesentlichen entlang ein und derselben Diametrale, wie Fig. 3 zeigt.

Dabei sind die beiden Wände 51, 66 durch die beiden Seiten eines etwa in dieser Richtung verlaufenden, relativ dünnen Materialsteges 68 gebildet. Auf diese Weise sind die ersten und zweiten Käfigschlitze 23 bzw. 64 in Umfangsrichtung somit jeweils paarweise und eng benachbart gruppiert.

Im Bereich der Ringnut 28 ist entweder — wie nicht gezeigt ist — am Antriebsschaft 12 oder, wie das Ausführungsbeispiel zeigt, an der Abschlusshülse 26 ein ringsum laufendes Federelement 70 angeordnet. Das Federelement besteht aus einem Ring aus elastisch verformbarem Material, insbesondere aus Gummi oder Kunstgummi, und hierbei vorzugsweise aus einem handelsüblichen O-Ring, der zwischen der Ringnut 28 und der äusseren Umfangsfläche der Antriebshülse 13 radial vorgespannt ist. Das Federelement 70 befindet sich auf axialer und radialer Höhe der Käfigschlitze 23, 64 und ist dort innerhalb einer Umfangsnut 71 zumindest teilweise aufgenommen, die innerhalb der Ringnut 28 enthalten ist. Die Aufnahme in der Umfangsnut 71 geschieht so, dass das Federelement 70 im unbeanspruchten Zustand (Fig. 2) radial, von aussen nach innen gesehen, über den Grund der Ringnut 28 in den Ringraum zwischen der Umfangsfläche 24 des Antriebsschaftes 12 und der Ringnut 28 vorsteht. Das Federelement 70 kann eine radiale, hier radial von aussen nach innen gerichtete, Kraft auf die ersten Kupplungskugeln 20 und zweiten Kupplungskugeln 63 ausüben. So übt das Federelement 70 beim Ansprechen der Kugeltaschenkupplung 19 auf die aus ihrer Kugeltasche 25, 65 radial heraus- und in die Ringnut 28 eintretende jeweilige Kupplungskugel 20, 63 eine Radialkraft aus, die die jeweilige Kupplungskugel 20, 63 zwischen der Umfangsfläche 24 des Antriebsschaftes 12 und der Ringnut 28 der Abschlusshülse 26 vorspannt. Dadurch wird die jeweils aus der Kuppelstellung und ihrer Kugeltasche 25 bzw. 65 herausgehobene Kupplungskugel 20 bzw. 63 jeweils vorgespannt gehalten, weil die herausgedrückte Kupplungskugel 20 bzw. 63 radial von innen gegen das Federelement 70 drückt, das ausweicht und eine entgegengerichtete Kraft auf die Kupplungskugel 20, 63 ausübt. Dadurch liegt die jeweils in den genannten Ringraum herausgedrückte Kupplungskugel 20 bzw. 63 sowohl innen als auch aussen an. Es besteht an beiden Stellen Berührungskontakt. Dadurch ist erreichbar, dass beim Ansprechen der Kugeltaschenkupplung 19 die radial ausgewanderten Kupplungskugeln 20, 63 bei einer Relativdrehung der weiterhin angetriebenen Antriebshülse 13 relativ zum blockierten, feststehenden Antriebsschaft 12 angetrieben werden und immer den gleichen Abstand in Arbeitsantriebsrichtung gemäss Pfeil 18 halten.

Die Wirkungsweise des Schnellwechseleinsatzes 10, insbesondere der Kugeltaschenkupplung 19 als Drehmomentkupplung, ist sehr ähnlich derjenigen bekannter Art (DE-B 25 11 148).

Fig. 5 zeigt den gekuppelten Ausgangszustand, bei dem der Gewindeschneidvorgang erfolgt. Die in diesem Zustand für die Drehmomentübertragung zuständigen und wirksamen ersten Kupplungskugeln 20 lagern innerhalb ihrer Kugeltaschen 25 und werden mittels des Druckringes 29 über die Druckfedern 30 mit voreingestellter Federkraft in den Kugeltaschen 25 gehalten. Der Kraftfluss beim Gewindeschneidvorgang verläuft über die Antriebsnocken 16 der Antriebshülse 13, über die Käfigschlitze 23, dort insbesondere die Wände 50, auf die darin lagernden ersten Kupplungskugeln 20 und von diesen über die Kugeltaschen 25 zum Antriebsschaft 12 und darin drehfest gehaltenen Gewindebohrer. Ersichtlich sind die zweiten Kupplungskugeln 63 hierbei ohne drehmomentübertragende Wirkung, da sich die zweiten Kupplungskugeln 63 fern der Wand 66 nahe der gegenüberliegenden Wand 67 befinden.

Sollte der Gewindebohrer beim Sacklochbohren auf den Grund des Sackloches auflaufen oder sonst infolge fehlerhafter Tiefeneinstellung oder bei nicht tief genug gebohrtem Kernloch auflaufen, wird der Gewindebohrer werkstückseitig gestoppt. Dem Antriebsdrehmoment wirkt ein bohrerseitiges Bremsmoment entgegen. Ist das Bremsmoment grösser als das voreingestellte Auslösemoment der Kugeltaschenkupplung 19, dann erfolgt selbsttätig ein Entkuppeln zwischen der Antriebshülse 13 und dem Antriebsschaft 12 mit Gewindebohrer. Die Kugeltaschenkupplung 19 spricht an. Hierbei werden zunächst die ersten Kupplungskugeln 20 über die Wand 50 aus den Kugeltaschen 25 herausgehoben, und dies gegen die axiale Federbelastung des Druckringes 29. Der radialen Auswanderbewegung der Kupplungskugeln 20 in die Ringnut 28 hinein ist eine entsprechende Axialverschiebung des Druckringes 29 gegen die Wirkung der Druckfeder 30 überlagert. Sind die ersten Kupplungskugeln 20 völlig aus ihren Kugeltaschen 25 herausgedrückt, werden sie von der Umfangsfläche 24 radial von innen nach aussen unter Zusammendrücken des Federelementes 70 gegen letzteres angedrückt und dazwischen federelastisch klemmend gehalten (Fig. 6).

Bei dieser Phase verbleiben die zweiten Kupplungskugeln 63 nach wie vor in ihren Kugeltaschen 65, und zwar so lange, wie bei der Relativdrehung zwischen Antriebshülse 13 und demgegenüber feststehendem Antriebsschaft 12 die Wände 66 der zweiten Käfigschlitze 64 in Umfangsrichtung gegen die zweiten Kupplungskugeln 63 auflaufen. Zugleich verbleiben die ersten Kupplungskugeln 20, verstärkt durch den Axialdruck der Federn 30 und den Druckring 29, weiterhin bei dieser Relativdrehbewegung (Fig. 6) in der entkuppelten Stellung. Sobald bei dieser Relativbewegung die Wände 66 der zweiten Käfigschlitze 64 die zugeordneten zweiten Kupplungskugeln 63 erreichen, werden die zweiten Kupplungskugeln 63 aus ihren Kugeltaschen 65 radial herausgehoben (Fig. 7). Während dieser Phase sind auch die ersten Kupplungskugeln 20 nach wie vor radial und axial in beschriebener Weise vorgespannt. Wenn bei dieser Relativbewegung zwischen Antriebshülse 13 und Antriebsschaft 12 eine Drehstellung erreicht wird, bei der die ersten Kupplungskugeln 20 sich auf Höhe der zweiten Kugeltaschen 65 befinden, also hier nach einem Umlaufwinkel von ca. 60°, so gelangen die ersten Kupplungskugeln 20 radial nach innen in diese zweiten Kugeltaschen 65. Die ersten Kupplungskugeln 20 können störungsfrei ohne ruckartige Bewegung in die Kugeltaschen 65 frei hineingelangen, weil schon zuvor beim Herausheben der zweiten Kupplungskugeln 63 aus diesen Kugeltaschen 65 die zweiten Kupplungskugeln 63 nun den über die Druckfedern 30 axial darauf drückenden Druckring 29 halten und gegen axiales Vordringen blockieren. Auch sind nun die zweiten Kupplungskugeln 63 in Radialrichtung im Ringraum mittels des Federelementes 70 so verspannt, dass eine innere und äussere Anlage geschieht.

Nach Durchlaufen eines weiteren Umfangswinkels gelangen die zweiten Kupplungskugeln 63 zurück in die in Umfangsrichtung nächstfolgenden Kugeltaschen 25, wobei kurz zuvor über die Wände 50 der ersten Käfigschlitze 23 die ersten Kupplungskugeln 20 wieder aus ihrer Kuppelstellung (Fig. 5) herausgehoben wurden, etwa in die Position gemäss Fig. 6. Das erneute Entkuppeln der Kupplungskugeln 20 geht ebenfalls ohne ruckartige Belastung sowohl der Drehmomentkupplung als auch das Gewindebohrers und der Maschine deswegen vonstatten, weil vor dem Herausheben der Kupplungskugeln 20 aus den Kugeltaschen sich noch die anderen Kupplungskugeln 63 in der ausgerückten Stellung befinden und über diese der federbelastete Druckring 29 axial in dieser Haltestellung zurückgehalten ist, so dass er also nicht unter Entspannung der Druckfedern 30 axial weiter vorbewegt werden kann.

Im Ergebnis wirkt also immer eine Gruppe der Kupplungskugeln 20 bzw. 63 als solche, die in die Ringnut 28 unter Zusammendrücken des Federelementes 70 radial ausweicht und axial die Druckkraft des darauf einwirkenden Druckringes 29 aufnimmt, während die andere Gruppe gerade frei und unbelastet ist. Es ergibt sich ein Wechselspiel zwischen den ersten Kupplungskugeln 20 und den zweiten Kupplungskugeln 63, wobei immer die andere Gruppe frei beweglich ist und doch während dieser Zwischenphase weder eine axiale noch eine radiale Entspannung erfolgen kann, die sonst ein ruckartiges Wiedereinkuppeln mit sich anschliessendem, ebenfalls ruckartigem Wiederauskuppeln zur Folge hätte, mit all den daraus resultierenden Nachteilen.

Die Kugeltaschenkupplung 19 dieser Art ist besonders einfach, kostengünstig herstellbar und führt zu kleinen Abmessungen. Sollte beim Gewindeschneiden der Gewindebohrer auflaufen, wird dieser entlastet. Die Gefahr, dass der Bohrer ausbricht oder überhaupt bricht, ist gebannt oder zumindest in hohem Masse reduziert. Die Gefahr des Flankenbruchs ist verhindert. Vorteilhaft ist ferner, dass sich keine Eindrücke der Kupplungskugeln durch Hämmern und Schlägen auf dem Schaft ergeben, was sonst beim Ansprechen der Drehmomentkupplung und wechselweisem Entkuppeln und wieder Zurückfallen in die gekuppelte Stellung der Fall war. Da keine Schläge übertragen werden, ist eine grössere Genauigkeit erreichbar. Dies gilt insbesondere hinsichtlich Feingewinde. Der Verschleiss der gesamten Kugeltaschenkupplung ist wesentlich geringer. Vorteilhaft ist ferner, dass auch die Werkzeugmaschine weniger beansprucht wird, da keine Schläge werkstückseitig und vom Schnellwechseleinsatz her auf die Maschinenspindel ausgeübt werden.

Die Kugeltaschenkupplung 19 wird dadurch wieder in den gekuppelten Zustand zurückgestellt, dass auf die Antriebshülse 13 ein gegensinniges, entgegen Pfeil 18 gerichtetes Drehmoment ausgeübt wird (Fig. 8). Hierbei werden die zweiten Kupplungskugeln 63 zur Drehmomentübertragung wirksam. Sie werden durch die sehr schräg gerichtete Wand 67 zwangsläufig in etwa radialer Richtung wieder in die nächstfolgenden Kugeltaschen 25 oder 65 zurückgestellt. Die Rückstellbewegung erfolgt plötzlich und schnell. Die Neigung der Wand 67 stellt bei der Rücklaufbewegung sicher, dass hierbei eine zwangsweise Mitnahme des Antriebsschaftes 12 mit Gewindebohrer erfolgt. Dies ist notwendig, weil bei der Rücklaufdrehung der Gewindebohrer aus dem geschnittenen Gewindeloch, ohne dieses zu zerstören, herausgedreht werden muss. Mithin ist die durch die Kugeltaschenkupplung 19 erzielte Drehmomentbegrenzung ausschliesslich wirksam, wenn die Antriebsrichtung derjenigen gemäss Pfeil 18 entspricht. Bei gegensinniger Rücklaufbewegung ist die Drehmomentkupplung 19 ausser Funktion. Die Drehmomentmitnahme erfolgt dann über die zweiten Käfigschlitze 64, dort die Wände 67, und die zweiten Kupplungskugeln 63.

Die Kupplungskugeln 20 können — bevor die zweiten Kupplungskugeln 63 in ihre Kugeltaschen eingedrückt sind — selbst noch einmal in ihre Kugeltaschen eintauchen. Deshalb muss die eine Wand 51 der ersten Käfigschlitze 23 eine solche Winkelausrichtung haben, dass kein wesentliches Drehmoment in Rückdrehrichtung auftritt und dadurch evtl. der Gewindebohrer herausgedreht wird, bevor über die Wände 67 die zweiten Kupplungskugeln 63 in Rückdrehrichtung beaufschlagt werden.

**Patentansprüche**

1. Überlastkupplungseinrichtung für Gewindeschneidfutter oder Schnellwechseleinsätze für diese, mit einer mit dem rotatorischen Antriebsmoment belastbaren zylindrischen Antriebshülse (13), mit einem mittels der Antriebshülse (13) antreibbaren, innerhalb dieser dazu koaxial gehaltenen Antriebsschaft (12), mit einer im Kraftfluss zwischen Antriebshülse (13) und Antriebsschaft (12) sitzenden, federbelasteten Kugeltaschenkupplung (19, 25, 65, 28, 20, 63) mit einstellbarem, auslösenden Drehmoment, die mehrere Kupplungskugeln (20, 63) aufweist, mittels denen der Antriebsschaft (12) mit der Antriebshülse (13) kuppelbar ist, wobei die Antriebshülse (13) auf einer axialen Stirnseite in Axialrichtung offene, der Anzahl der Kupplungskugeln (20, 63) entsprechende und zur Aufnahme jeweils einer Kupplungskugel (20, 63) dienende, in Radialrichtung nach innen und aussen offene Käfigschlitze (23, 64) aufweist, deren Breite mindestens so gross wie der Kupplungskugeldurchmesser ist, und wobei der Antriebsschaft (12) auf seiner äusseren, der Antriebshülse (13) zugewandten Umfangsfläche (24) im Axialbereich der Käfigschlitze (23, 64) der Anzahl der Kupplungskugeln (20, 63) entsprechende, in Umfangsrichtung in vorzugsweise gleichen Winkelabständen voneinander angeordnete, vertiefte Kugeltaschen (25, 65) mit gegenüber dem Durchmesser der Kupplungskugeln (20, 63) geringerer Tiefe zur Aufnahme der Kupplungskugeln (20, 63) aufweist, mit einer auf der Antriebshülse (13) unter Bildung eines radialen Ringraumes gehaltenen zylindrischen Abschlusshülse (26), die die Antriebshülse (13) mit Antriebsschaft (12) koaxial umgibt, und mit einem innerhalb des Ringraumes der Abschlusshülse (26) auf einer Axialseite der Kupplungskugeln (20, 63) angeordneten Druckring (29), der mittels verstellbar abgestützter Druckfedern (30) axial in Richtung auf die Käfigschlitze (23, 64) und gegen die Kupplungskugeln (20, 63) anpressbar ist, wobei die Käfigschlitze (23, 64) gegen die Arbeitsantriebsrichtung (Pfeil 18) der Antriebshülse (13) im wesentlichen geneigt gestellt sind und die Abschlusshülse (26) im Axialbereich der Käfigschlitze (23, 64) im Inneren eine Ringnut (28) besitzt, deren Nutgrund mit einem mindestens dem Kupplungskugeldurchmesser entsprechenden Radialabstand von der Umfangsfläche (24) des Antriebsschaftes (12) verläuft, dadurch gekennzeichnet, dass die Käfigschlitze (23, 64) in Umfangsrichtung jeweils paarweise und eng benachbart aufeinander folgen, wobei sich an den ersten Käfigschlitz (23) eines Paares, dessen Schlitzbreite im wesentlichen nur etwa so gross wie der Durchmesser der zugeordneten Kupplungskugel (20) ist, eng benachbart ein zweiter Käfigschlitz (64) dieses Paares anschliesst, der eine im Verhältnis zum Durchmesser der ihm zugeordneten Kupplungskugel (63) wesentlich grössere Schlitzbreite aufweist, und dass im Bereich des Ringraumes zwischen dem Antriebsschaft (12) und der Abschlusshülse (26) an einem der beiden ein ringsum laufendes Federelement (70) angeordnet ist, das bei Ansprechen der Kugeltaschenkupplung (19) auf die aus der Kugeltasche (25, 65) radial heraus- und in die Ringnut (28) eintretende jeweilige Kupplungskugel (20, 63) eine die Kupplungskugel (20, 63) zwischen der Umfangsfläche (24) des Antriebsschaftes (12) und der Ringnut (28) der Abschlusshülse (26) vorspannende Radialkraft ausübt.

2. Überlastkupplungseinrichtung nach Anspruch 1, dadurch gekennzeichnet, dass bei Ansprechen der Kugeltaschenkupplung (19) immer eine der beiden Kupplungskugeln (20, 63) eines Käfigschlitzpaares (23, 64) unter radialer und axialer Vorspannung steht.

3. Überlastkupplungseinrichtung nach Anspruch 1 oder 2, dadurch gekennzeichnet, dass bei Ansprechen der Kugeltaschenkupplung (19) und umlaufender Antriebshülse (13) im Wechsel immer eine der beiden Kupplungskugeln (20, 63) unter radialer und axialer Vorspannung steht, während die andere der beiden Kupplungskugeln (20, 63) entlastet und frei beweglich ist.

4. Überlastkupplungseinrichtung nach einem der Ansprüche 1-3, dadurch gekennzeichnet, dass das Federelement (70) in der Abschlusshülse (26) enthalten ist und eine nach innen gerichtete Radialkraft ausüben kann.

5. Überlastkupplungseinrichtung nach einem der Ansprüche 1-4, dadurch gekennzeichnet, dass das Federelement (70) in dem axialen Grund der Käfigschlitze (23, 64) axial und radial benachbarten Bereich angeordnet ist.

6. Überlastkupplungseinrichtung nach Anspruch 5, dadurch gekennzeichnet, dass die Abschlusshülse (26) in dem auf axialer und radialer Höhe der Käfigschlitze (23, 64) verlaufenden Bereich ihrer Ringnut (28) eine Umfangsnut (71) enthält, in der das Federelement (70) aufgenommen und so gehalten ist, dass das Federelement (70) im unbeanspruchten Zustand radial von aussen nach innen über den Grund der Ringnut (28) vorsteht.

7. Überlastkupplungseinrichtung nach einem der Ansprüche 1-6, dadurch gekennzeichnet, dass das Federelement (70) zwischen der Ringnut (28) und der äusseren Umfangsfläche der Antriebshülse (13) radial vorgespannt ist.

8. Überlastkupplungseinrichtung nach einem der Ansprüche 1-7, dadurch gekennzeichnet, dass das Federelement (70) aus einem Ring aus elastisch verformbarem Material, insbesondere aus Gummi oder Kunstgummi, gebildet ist.

9. Überlastkupplungseinrichtung nach einem der Ansprüche 1-8, dadurch gekennzeichnet, dass das Federelement (70) aus einem O-Ring gebildet ist.

10. Überlastkupplungseinrichtung nach einem der Ansprüche 1-9, dadurch gekennzeichnet, dass die beiden einander mit der Schlitzbreite gegenüberstehenden Wände (50, 51) des ersten Käfigschlitzes (23), in Richtung radial nach aussen gesehen, zumindest schwach V-förmig auseinanderstreben, wobei die in Arbeitsantriebsrichtung (Pfeil 18) hintere, beim Ansprechen der Kugeltaschenkupplung (19) auf die zugeordnete Kupplungskugel (20) im Sinne einer Heraushebung aus der Kugeltasche (25, 65) arbeitende eine Wand (50) etwa auf einer Sekante zur Diametralen verläuft, während die andere Wand (51) etwa auf einer Diametralen verläuft.

11. Überlastkupplungseinrichtung nach einem der Ansprüche 1-10, dadurch gekennzeichnet, dass die beiden einander mit der Schlitzbreite gegenüberstehenden Wände (66, 67) jedes zweiten Käfigschlitzes (64), in Richtung radial nach aussen gesehen, zumindest schwach V-förmig auseinanderstreben, wobei die in Arbeitsantriebsrichtung (Pfeil 18) beim Ansprechen der Kugeltaschenkupplung (19) auf die zugeordnete Kupplungskugel (63) im Sinne einer Heraushebung aus der Kugeltasche (25, 65) arbeitende und die Kupplungskugel (63) vor sich herschiebende eine Wand (66) etwa auf einer Diametralen verläuft, während die andere Wand (67) auf einer zur Diametralen etwa parallelen Sekante verläuft.

12. Überlastkupplungseinrichtung nach den Ansprüchen 10 und 11, dadurch gekennzeichnet, dass beide etwa auf einer Diametralen verlaufenden Wände (51, 66) des ersten Käfigschlitzes (23) und zweiten Käfigschlitzes (64) zumindest im wesentlichen entlang ein und derselben Diametrale verlaufen und durch die beiden Seiten eines etwa in dieser Richtung verlaufenden, dünnen Materialsteges (68) gebildet sind.

13. Überlastkupplungseinrichtung nach einem der Ansprüche 1-12, gekennzeichnet durch drei etwa in gleichen Umfangswinkelabständen aufeinanderfolgende erste Käfigschlitze (23) und darin enthaltene erste Kupplungskugeln (20), die in der Arbeitsantriebsrichtung (Pfeil 18) das Antriebsmoment übertragen, sowie durch drei weitere, etwa in gleichen Umfangswinkelabständen aufeinanderfolgende zweite Käfigschlitze (64) und darin enthaltene, entsprechend dem Übermass der Käfigschlitzbreite in Umfangsrichtung im Bereich zwischen der einen Wand (66) und der anderen Wand (67) bewegliche zweite Kupplungskugeln (63), die an der Drehmomentübertragung in Arbeitsantriebsrichtung (Pfeil 18) unbeteiligt sind und die in der zur Arbeitsantriebsrichtung (Pfeil 18) gegensinnigen Rückdrehrichtung bei Angriff der einen Wand (67), die entlang einer zur Diametralen etwa parallelen Sekante verläuft, ein Antriebsmoment übertragen.

**Claims**

1. Overload coupling device for screwthread cutting chuck or quick-change inserts therefor, with a cylindrical drive sleeve (13) to which the rotatory drive torque can be applied, and also comprising a drive shank (12) adapted to be driven by and held coaxially within the drive sleeve (13), with a spring loaded ball pocket coupling (19, 25, 65, 28, 20, 63) located in the force flux between drive sleeve (13) and drive shank (12), with adjustable releasing torque, comprising a plurality of coupling balls (20, 63) by means of which the drive shank (12) can be coupled to the drive sleeve (13), the drive sleeve (13) having on an axial end face and open in an axial direction, radially inwardly and outwardly open cage slots (23, 64) of which each serves to accommodate a coupling ball (20, 63), the slots corresponding in number to the number of coupling balls (20, 63) and having a width which is at least as large as the coupling ball diameter, the drive shank (12) comprising on its outer peripheral face (24) which is towards the drive sleeve (13), disposed in the axial area of the cage slots (23, 64) and corresponding to the number of coupling balls (20, 63), ball cup depressions (25, 65) which in a peripheral direction are disposed at preferably equal angular intervals from one another and having in relation to the diameter of the coupling balls (20, 63) a lesser depth to accommodate the coupling balls (20, 63), with a cylindrical closure sleeve (26) supported on the drive sleeve (13) and so forming a radial annular space, the closure sleeve (26) coaxially enclosing the drive sleeve (13) with the drive shank (12), and with, disposed inside the annular space in the closure sleeve (26) and on an axial side of the coupling balls (20, 63), a thrust ring (29) which can be pressed by adjustably stepped thrust springs (30) axially in the direction of the cage slots (23, 64) and against the coupling balls (20, 63), the cage slots (23, 64) being positioned at a substantial angle of inclination in respect of the working drive direction (arrow 18) of the drive sleeve (13) while the closure sleeve (26) has in the axial area of the cage slots (23, 64) and in the interior an annular groove (28), the bottom of the groove extending from the peripheral face (24) of the drive shank (12) with a radial distance which corresponds at least to the diameter of the coupling balls, characterised in that the cage slots (23, 64) follow one another in a peripheral direction pairwise and in a closely neighbouring relationship, the first cage slot (23) of a pair of which the slot width is substantially only about as great as the diameter of the associated coupling ball (20), is closely followed by a second cage slot (64) of this pair of which the slot width is substantially larger in proportion to the diameter of the coupling ball (63) which is associated with it, and in that in the region of the annular space between the drive shank (12) and the closure sleeve (26) there is disposed on one of the two an encirclingly extending spring element (70) which upon response of the ball pocket coupling (19), exerts on the relevant coupling ball (20, 63) which moves radially outwardly and enters the annular groove (28), a radial force which pretensions the coupling ball (20, 63) between the peripheral face (24) of the drive shank (12) and the annular groove (28) of the closure sleeve (26).

2. Overload coupling device according to Claim 1, characterised in that upon response of the ball pocket coupling (19), there is always one of the two coupling balls (20, 63) of a cage slot pair (23, 64) which is subject to radial and axial pretension.

3. Overload coupling device according to Claim 1 or 2, characterised in that upon response of the ball pocket coupling (19) and rotation of the drive sleeve (13) there is always one of the two coupling balls (20, 63) alternately subject to radial and axial pretension, while the other of the two couplings balls (20, 63) is relieved of loading and is free to move.

4. Overload coupling device according to one of Claims 1 to 3, characterised in that the spring element (70) is contained in the closure sleeve (26) and can exert a radially inwardly directed radial force.

5. Overload coupling device according to one of Claims 1 to 4, characterised in that the spring element (70) is located in the area which is axially and radially adjacent the axial bottom of the cage slots (23, 64).

6. Overload coupling device according to Claim 5, characterised in that the closure sleeve (26) comprises in that area of its annular groove (28) which extends at an axial and radial height of the cage slots (23, 64), a peripheral groove (71) in which the spring element (70) is accommodated and is so supported that in the unstressed condition, the spring element (70) projects radially from the outside inwardly and over the bottom of the annular groove (28).

7. Overload coupling device according to one of Claims 1 to 6, characterised in that the spring element (70) is pretensioned radially between the annular groove (28) and the outer peripheral surface of the drive sleeve (13).

8. Overload coupling device according to one of Claims 1 to 7, characterised in that the spring element (70) is constituted by a ring of elastically deformable material, in particular rubber or synthetic rubber.

9. Overload coupling device according to one of Claims 1 to 8, characterised in that the spring element (70) is constituted by an O-ring.

10. Overload coupling device according to one of Claims 1 to 9, characterised in that the two walls (50, 51) of the first cage slot (23) which are opposite each other, being spaced apart by the width of the slot, when viewed in a radially outwards direction, diverge in an at least slightly V-shape, the one wall (50) which is at the rear in the working drive direction (arrow 18), upon response of the ball pocket coupling (19), working on the associated coupling ball (20) in such a way as to lift it out of the ball pocket (25, 65) and extending substantially on a secant to the diametral line, while the other wall (51) extends substantially on a diametral line.

11. Overload coupling device according to one of Claims 1 to 10, characterised in that the two walls (66, 67) which face each other while being spaced apart by the width of the slot and relating to every second cage slot (64), viewed in a radially outwards direction, diverge in an at least slightly V-shape, the one wall (66) which, when the ball pocket coupling (19) responds, works on the associated coupling ball (63) so as to lift it out of the ball pocket (25, 65), and pushing the coupling ball (63) away in front of it, extends substantially on a diametral line while the other wall (67) extends on a secant which is substantially parallel with the diametral line.

12. Overload coupling device according to Claim 10 and 11, characterised in that both walls (51, 66) which extend substantially on a diametral line and which relate to the first cage slot (23) and second cage slot (64) extend at least substantially along one and the same diametral line and are formed by the thin material web (68) extending substantially in this direction.

13. Overload coupling device according to one of Claims 1 to 12, characterised by, following each other substantially at equal peripheral angular intervals, three first cage slots (23) and contained therein first coupling balls (20) which transmit the driving torque in the working drive direction (arrow 18), and by, following one another substantially at equal peripheral angular intervals, three further and second cage slots (64) and contained therein and corresponding to the oversize of the cage slot width in a peripheral direction, second coupling balls (63) movable in the area between one wall (66) and the other wall (67) and which do not participate in the transmission of torque in a working drive direction (arrow 18) and which in the direction of reverse rotation which is in opposition to the working drive direction (arrow 18) transmit a driving torque when acted upon by the one wall (67) which extends along a secant which is substantially parallel with the diametral line.

**Revendications**

1. Dispositif de débrayage en cas de surcharge pour des mandrins de filetage ou pour des porte-outils à serrage rapide destinés à ces derniers, comportant une douille d'entraînement cylindrique (13) pouvant être entraînée en rotation par le couple d'entraînement, un fût d'entraînement (12) pouvant être entraîné au moyen de la douille d'entraînement (13) et tenu coaxialement à l'intérieur de celle-ci, un accouplement à billes (19, 25, 65, 28, 20, 63) assujetti à un ressort et placé sur le parcours des forces entre la douille d'entraînement (13) et le fût d'entraînement (12) et ayant un couple de rotation de déclenchement réglable, lequel accouplement comporte plusieurs billes d'accouplement (20, 63) permettant d'accoupler le fût d'entraînement (12) à la douille d'entraînement (13), dispositif de débrayage dans lequel la douille d'entraînement (13) comporte sur un côté frontal axial des fentes de cage (23, 64) dont la largeur est au moins égale au diamètre des billes d'accouplement, ouvertes dans le sens axial, correspondant au nombre des billes d'accouplement (20, 63), servant à recevoir chacune une bille d'accouplement (20, 63) et ouvertes dans le sens radial vers l'intérieur et vers l'extérieur, le fût d'entraînement (12) comporte sur sa surface périphérique extérieure (24) tournée vers la douille d'entraînement (13), dans la zone axiale des fentes de cage (23, 64), pour recevoir les billes d'accouplement (20, 63), des logements de billes (25, 65) en creux, correspondant au nombre de billes d'accouplement (20, 63), disposés à intervalles angulaires de préférence égaux dans le sens de la périphérie, et ayant une profondeur inférieure au diamètre des billes d'accouplement (20, 63), une douille de fermeture cylindrique (26) entourant coaxialement la douille d'entraînement (13) avec le fût d'entraînement (12), maintenue sur la douille d'entraînement (13) en formant un volume annulaire radial, et une bague de pression (29) disposée à l'intérieur du volume annulaire de la douille de fermeture (26) sur un côté axial des billes d'accouplement (20, 63), laquelle bague de pression peut être pressée axialement en direction des fentes de cage (23, 64) et contre les billes d'accouplement (20, 63) au moyen de ressorts de pression (30) s'appuyant sur une butée réglable, les fentes de cage (23, 64) sont inclinées sensiblement dans le sens d'entraînement en service (flèche 18) de la douille d'entraînement (13) et la douille de fermeture (26) comporte, dans la zone axiale des fentes de cage (23, 64), à l'intérieur, une gorge annulaire (28) dont le fond est à une distance radiale de la surface périphérique (24) du fût d'entraînement (12) correspondant au moins au diamètre des billes d'accouplement, caractérisé en ce que les fentes de cage (23, 64) se succèdent respectivement par paires dans le sens périphérique très proches l'une de l'autre; qu'à la première fente de cage (23) d'une paire dont la largeur est juste aussi grande que le diamètre de la bille d'accouplement associée (20) se raccorde, au voisinage immédiat, la seconde fente de cage (64) de cette paire qui a une largeur sensiblement plus grande que le diamètre de la bille d'accouplement (63) qui lui est associée; et que, dans la zone de volume annulaire entre le fût d'entraînement (12) et la douille de fermeture (26), est disposé sur l'un des deux un élément élastique (70) qui en fait tout le tour et qui exerce, lors de la réponse de l'accouplement à billes (19), sur les billes d'accouplement (20, 63) sortant radialement du logement (25, 65) et pénétrant dans la gorge annulaire (28) une force radiale qui précontraint les billes d'accouplement (20, 63) entre la surface périphérique (24) du fût d'entraînement (12) et la gorge annulaire (28) de la douille de fermeture (26).

2. Dispositif de débrayage en cas de surcharge selon la revendication 1, caractérisé en ce que, lors de la réponse de l'accouplement à billes (19), il y a toujours une des deux billes d'accouplement (20, 63) d'une paire de fentes de cage (23, 64) soumise à une précontrainte radiale et axiale.

3. Dispositif de débrayage en cas de surcharge selon la revendication 1 ou 2, caractérisé en ce que, lors de la réponse de l'accouplement à billes (19) et alors que la douille d'entraînement (13) tourne, une des deux billes d'accouplement (20, 63) à tour de rôle est toujours soumise à une précontrainte radiale et axiale, tandis que l'autre des deux billes d'accouplement (20, 63) est déchargée et peut se mouvoir librement.

4. Dispositif de débrayage en cas de surcharge selon l'une des revendications 1 à 3, caractérisé en ce que l'élément élastique (70) est logé dans la douille de fermeture (26) et peut exercer une force radiale orientée vers l'intérieur.

5. Dispositif de débrayage en cas de surcharge selon l'une des revendications 1 à 4, caractérisé en ce que l'élément élastique (70) est disposé dans la zone axialement et radialement voisine des fentes de cage (23, 64).

6. Dispositif de débrayage en cas de surcharge selon la revendication 5, caractérisé en ce que la douille de fermeture (26) comporte dans la zone de sa gorge annulaire (28) s'étendant à la hauteur axiale et radiale des fentes de cage (23, 64) une gorge périphérique (71) dans laquelle est logé et maintenu l'élément élastique (70) de telle sorte que cet élément élastique (70), lorsqu'il n'est pas sollicité, dépasse radialement de l'extérieur vers l'intérieur au-dessus du fond de la gorge annulaire (28).

7. Dispositif de débrayage en cas de surcharge selon l'une des revendications 1 à 6, caractérisé en ce que l'élément élastique (70) est radialement précontraint entre la gorge annulaire (28) et la surface périphérique extérieure de la douille d'entraînement (13).

8. Dispositif de débrayage en cas de surcharge selon l'une des revendications 1 à 7, caractérisé en ce que l'élément élastique (70) est constitué par une bague en matériau élastiquement déformable, notamment en caoutchouc naturel ou synthétique.

9. Dispositif de débrayage an cas de surcharge selon l'une des revendications 1 à 8, caractérisé en ce que l'élément élastique (70) est formé par un joint torique.

10. Dispositif de débrayage en cas de surcharge selon l'une des revendications 1 à 9, caractérisé en ce que les deux parois (50, 51) de la première fente de cage (23) en vis-à-vis et séparées l'une de l'autre par la largeur de la fente, s'écartent l'une de l'autre, vu dans le sens radial vers l'extérieur, au moins légèrement en forme de V; et que la paroi postérieure (50), dans le sens d'entraînement en service (flèche 18) agissant lors de la réponse de l'accouplement à billes (19) sur la bille d'accouplement associée (20) en la faisant sortir du logement de billes (25, 65) s'étend sensiblement sur une corde coupant une ligne diamétrale, tandis que l'autre paroi (51) se trouve sensiblement sur une ligne diamétrale.

11. Dispositif de débrayage en cas de surcharge selon l'une des revendications 1 à 10, caractérisé en ce que les deux parois (66, 67) de chaque seconde fente de cage (64) en vis-à-vis et espacées de la largeur de la fente, s'écartent l'une de l'autre, vu dans le sens radial vers l'extérieur, au moins légèrement en forme de V; et que la paroi (66) agissant dans le sens d'entraînement en service (flèche 18), lors de la réponse de l'accouplement à billes (19) sur la bille d'accouplement associée (63) la faisant sortir du logement (25, 65) et poussant devant elle la bille d'accouplement (63), s'étend sensiblement sur une ligne diamétrale, tandis que l'autre paroi (67) s'étend sur une corde parallèle à la ligne diamétrale.

12. Dispositif de débrayage en cas de surcharge selon les revendications 10 et 11, caractérisé en ce que les deux parois (51, 66) de la première fente de cage (23) et de la seconde fente de cage (64) s'étendant sur une ligne diamétrale, s'étendent au moins pour l'essentiel le long de la même ligne diamétrale et sont formées par les deux côtés d'une mince nervure (68) s'étendant sensiblement dans cette direction.

13. Dispositif de débrayage en cas de surcharge selon l'une des revendications 1 à 12, caractérisé par trois premières fentes de cage (23) se succédant à intervalles angulaires périphériques égaux et par des premières billes d'accouplement (20) logées dans ces fentes, qui transmettent le couple d'entraînement en service (flèche 18), ainsi que par trois autres secondes fentes de cage (64) se succédant à intervalles angulaires périphériques égaux et par des secondes billes d'accouplement (63) contenues dans ces fentes, qui vont se mouvoir dans le sens périphérique dans la zone de l'une des parois (66) et de l'autre paroi (67), en fonction de la surmesure de la largeur de fente de cage, lesquelles secondes billes d'accouplement ne participent pas à la transmission du couple de rotation dans le sens d'entraînement en service (flèche 18) et qui, dans le sens de rotation inverse du sens d'entraînement en service (flèche 18) transmettent un couple d'entraînement lors de l'attaque de l'une des parois (67) qui s'étend le long d'une corde parallèle à la ligne diamétrale.

# Fig. 1

# Fig. 2

# Fig. 3

# Fig. 4

# Fig.5

# Fig.6

# Fig.7

# Fig.8